(19) Europäisches Patentamt
European Patent Office
Office européen des brevets

(11) **EP 2 630 559 B1**

(12) **EUROPEAN PATENT SPECIFICATION**

(45) Date of publication and mention
of the grant of the patent:
**23.07.2014 Bulletin 2014/30**

(51) Int Cl.:
**G06F 3/041** *(2006.01)*

(21) Application number: **10793227.9**

(22) Date of filing: **15.12.2010**

(86) International application number:
**PCT/EP2010/069741**

(87) International publication number:
**WO 2012/052069 (26.04.2012 Gazette 2012/17)**

(54) **MOBILE COMMUNICATION DEVICE WITH THREE-DIMENSIONAL SENSING AND A METHOD THEREFORE**

MOBILE KOMMUNIKATIONSVORRICHTUNG MIT DREIDIMENSIONALER ERFASSUNG UND VERFAHREN DAFÜR

DISPOSITIF DE COMMUNICATION MOBILE AVEC DÉTECTION TRIDIMENSIONNELLE ET PROCÉDÉ POUR CE DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2010 US 405685 P**

(43) Date of publication of application:
**28.08.2013 Bulletin 2013/35**

(73) Proprietor: **Sony Ericsson Mobile Communications AB
221 88 Lund Sweden (SE)**

(72) Inventor: **KLINGHULT, Gunnar
S-223 59 Lund (SE)**

(74) Representative: **Banzer, Hans-Jörg
Kraus & Weisert
Patent- und Rechtsanwälte
Thomas-Wimmer-Ring 15
80539 München (DE)**

(56) References cited:
**EP-A2- 2 172 834        US-A1- 2006 170 658
US-A1- 2007 222 766**

**Description**

TECHNICAL FIELD OF THE INVENTION

The present invention relates to a mobile communication device with three-dimensional sensing and a method therefore. The three-dimensional sensing is preferably used for detecting objects in a spatial volume above a display of the mobile communication device.

DESCRIPTION OF RELATED ART

Many of the mobile communication devices of today are equipped with a touch sensitive display or a camera. Such a touch sensitive display is used as input means with which a user may interact. Some of the displays of today may also sense an object or gesture in close proximity of the display. Thus, it is actually not always necessary to touch the display in order to interact with the mobile communication device.

Also the camera of the mobile communication device may be use to detect or sense an object or gesture. However, the range of the camera is typically limited and does not work satisfactory at all in proximity of the camera.

Thus, there is a need to be able to sense an object or gesture above a display of a mobile communication device within a much greater range and in three dimensions than is possible today and also to optimize the spatial resolution in such range.

Three-dimensional sensing of objects and gestures above the mobile communication device will give the user a possibility to interact in new ways and in three dimensions with the mobile communication device. The present invention may for example be used together with three-dimensional displays and/or gaming.

US 2007/0222766 A1 discloses a mobile communication device according to the preamble of claim 1.

US 2006/0170658 A1 discloses a display device capable of inputting information from a screen by light containing an optical sensor system.

SUMMARY OF THE INVENTION

Hence, it is an object of the present invention to overcome the above-identified deficiencies related to the prior art and create a mobile device and a method therefore that is able to sense an object or gesture in three dimensions and within a greater detection volume and with better resolution above the display of the mobile communication device.

The present invention provides a mobile communication device as defined in claim 1 and a method as defined in claim 7. The dependent claims define preferred embodiments of the invention.

According to a first aspect of the invention this object is fulfilled by mobile communication device capable of three-dimensional sensing of objects in a spatial volume above a display of the mobile communication device. The device comprises input means having at least two sensors having different spatial resolution that changes with distance and configured for collecting data about objects in said spatial volume and a processing logic for processing spatial object data. The mobile communication device is configured to execute the following steps when it is in an detection mode; receiving an detection signal from at least one of the sensors indicating that an object is present above the display; determining the distance to the detected object; looking up weight parameters associated with each sensor in a look up table, said weight parameters being dependable on the determined distance; collecting data about the detected object from each sensor; and calculating the position of the detected object by using the collected data together with the looked up weight parameters.

In a preferred embodiment of the mobile communication device said weight parameters are further dependable on the ambient light conditions.

In yet another embodiment of the mobile communication device said weight parameters are further dependable on the surrounding humidity.

In another embodiment of the mobile communication device, the input means comprise at least a capacitive sensor and an electric filed sensor.

In a further variation of the mobile communication device, the input means also comprises an optical sensor.

In yet a further embodiment of the mobile device the display is a force sensitive display configured to act as one of the at least two sensors.

According to a second aspect of the present invention this object is fulfilled by a method for three-dimensional sensing of objects in a spatial volume above a display of the mobile communication device. The mobile communication device comprises input means with at least two sensors having different spatial resolution that change with distance and configured for collecting data about objects in said spatial volume and a processing logic for processing spatial object data. The method comprises the following steps; receiving an detection signal from at least one of the sensors indicating that an object is present above the display; determining the distance to the detected object; looking up weight parameters associated with each sensor in a look up table, said weight parameters being dependable on the determined distance; collecting data about the detected object from each sensor; and calculating the position of the detected object by using the collected data together with the looked up weight parameters.

According to one embodiment of the method said weight parameters are further dependable on the ambient light conditions.

In yet another embodiment the method said weight parameters are further dependable on the surrounding humidity.

In a variation of the method the data is collected from at least a capacitive sensor and an electric filed sensor.

In yet another embodiment of the method the data is also collected from an optical sensor.

In another embodiment of the method the data is collected from a force sensitive display configured to act as one of the at least two sensors.

BRIEF DESCRIPTION OF THE DRAWINGS

The present invention will now be described in more detail in relation to the enclosed drawings, in which:

Figure 1 schematically shows a mobile communication device according to the present invention,

Figure 2 illustrates a block diagram of different elements of a mobile communication device,

Figure 3 is a diagram showing the spatial resolution of different sensors and the aggregated spatial resolution of the sensors, and

Figure 4 shows a flow chart showing the steps of the method according to the present invention.

DETAILED DESCRIPTION OF EMBODIMENTS

A mobile communication device according to the present invention will now be described in relation to a cellular telephone, which is a preferred variation of the invention. However, the multiple sensors for sensing an object in three dimensions above a spatial volume above some kind of display is also applicable to other mobile communication devices such as a cordless telephone, a PDA, a lap top computer, a media player, such as MP3 player or DVD player or any other type of portable device having a display and communicating with radio waves.

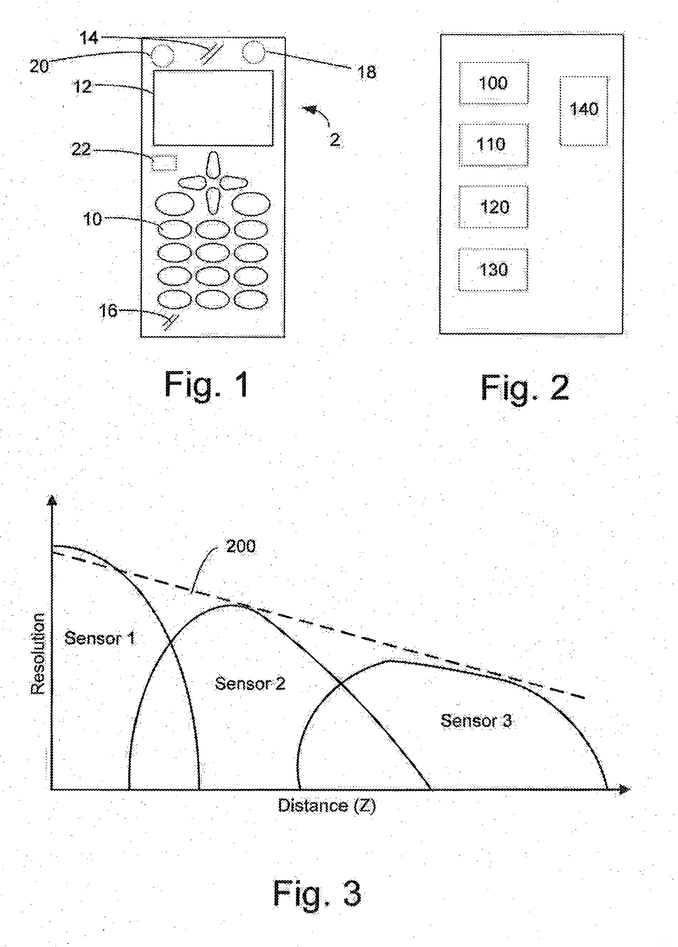

Figure 1 show an exemplary mobile communication device 2, in which the three-dimensional sensing according to the present invention may be implemented. As shown the mobile communication device 2 may include control buttons or keys 10, a display 12, a speaker 14, a microphone 16, a first sensor 18, a second sensor 20 and a third sensor 22.

It should be understood that the mobile communication device 2 is surrounded by a housing, not specially denoted in figure 1, which may protect the mobile communication device 2 from wear and outsize elements. The housing is designed to hold various elements of the mobile communication device 2, such as the display 12, the sensors 18-22 etc as is well known by a person skilled in the art.

Also the speaker 14 and the microphone 16 are well known elements of a mobile communication device 2 and are therefore not discussed any further. When it comes to the display 12 it may be an ordinary display for displaying information or it may be used as a sensor as will be described in more detail below. The control buttons or keys 10 may be omitted if for example the display is a touch sensitive display, which is configured to show virtual keys or control buttons. Of course, as is realized by a skilled person a combination of hardware keys and virtual keys may also be used.

The three sensors 18-22 depicted in figure 1 are used for three-dimensional sensing of an object or gestures in a spatial volume above the display 12 of the mobile communication device 2. They are preferably arranged such that they have a detection direction that is perpendicular from the display, i.e. the z-direction. However, depending of the use of the sensed three-dimensional senor data the sensors may be arranged and configured in another direction as is realized by a person skilled in the art. There are many sensors that may be used for this purpose. Examples of such sensors are optical passive sensors, such as cameras or long wave infrared sensors. Most mobile communication devices 2 of today are already equipped with a camera, which makes it extra suitable to use the camera as one of the sensors for three-dimensional sensing. Other sensors are optical active sensors, which use infrared light to illuminate the object and then use optical sensors, like an infrared sensitive camera or infrared pbotodiodes, to detect and locate the object.

Furthermore, sensors such as electrical field sensors, capacitive sensors, ultrasound sensors or radar may be used to detect the object or objects in the spatial volume above the display.

Figure 2 shows a block diagram of components usually present in a mobile communication device 2. A mobile communication device may include input means 100, output means 110, filter means 120, processing logic 130 and memory means 140. The mobile communication device may be configured in a number of different ways and include other or different elements as is well known by a person in the art, such as modulators, demodulators, encoders, decoders etc. for processing data.

The input means 100 may include all mechanisms that a user uses in order to input information into the mobile communication device, such as a microphone 16, a touch sensitive display 12 and keys 10 etc. Also the three sensors for sensing an object may be defined as input means 100.

Output means 110 may include all devices that output information from the mobile communication device including the display 12, the speaker 14 etc. The filter means 120 may be used to weight the input signals from the different sensors 18-22, as will be described in detail below.

The processing logic 130 may include one or more processors, microprocessors, application specific integrated circuits or the like. The processing logic 130 may execute software instructions/programs or data structures in order to control the operation of the mobile communication device 2. It is also possible to use the processing logic 130 to implement the filter means 120. The memory means 140 may be implemented as a dynamic storage device, a static storage device, a flash memory etc. The memory means 140 may be used to store information and/or instructions for execution by the processing logic 130, temporary variables or intermediate information during execution of instructions by the processing logic 130 etc.

In order to better understand how the three-dimensional sensing is implemented in the mobile communication device 2 an example using three different types of sensors will be described. The reason why three sensors are used and not just one is that the different sensors have different spatial resolution that will change with distance, i.e. one sensor may have a high resolution as the object is close to the display and another sensor may have a high resolution when the object is further away from the display of the communication device. This is illustrated by figure 3 that shows the resolution of the three above mentioned sensors depending on the distance from the display. The curves depicted in figure 3 will besides distance and type of sensor, as mentioned above, also depend on several other parameters such as number of sensors within each sensor type, optical properties such as depth of field etc.

It should be understood that the number of sensors used to accomplish the three-dimensional sensing according to the present invention may vary depending on the range in which an object is to be detected. The important thing is that there are at least two sensors in order to be able to fusion data from the different sensors, which will be explained closer below. Thus, the expression multiple as used in the present application will mean at least two sensors.

The multiple sensors used in this preferred example are a first capacitive sensor 18, a second electric field sensor 20 and a third optical sensor 22. Turning now to figure 3 again, the resolution for each sensor 18-22 in a Z-direction is shown, i.e. in a direction perpendicular to the display 12. The first capacitive sensor 18 will work in a range of for example Z = 0 to about 25-40 mm. As the outer limit is approached the signal-to-noise ratio will decrease which will decrease the spatial resolution. Thus, beyond a distance of about 40 mm the first capacitive sensor 18 will not be very useful for three-dimensional sensing of an object. Then instead the second electric field sensor 20 may be used, which for example has an effective range between 25 to 150 mm before the signal-to-noise ratio will decrease and negatively affect the spatial resolution. Abode this range the third optical sensor 22 may be used, which may have an effective range of 100-300 mm. An example of an optical sensors 22 may be infrared light emitting diodes that illuminate the object to be detected together with at least three optical sensors that use triangulation in order to detect the object.

Even though specific sensors have been described in the example above, it should be understood that there are other sensors that may be used and that have different resolutions compared to the sensors depicted in figure 3. It may for example be possible to use a touch sensitive display as one sensor. Said display may be able to sense the applied force thereon and in response thereto also issue a signal representing a Z-value in the negative Z-direction. It is also possible to use a camera, which most mobile communication devices are equipped with today, as a sensor, usually having a detection range from about 100 mm and there above.

In order to optimize spatial resolution when an object is sensed, the sensor data from the multiple sensors 18-22 are fused. A filter means 120 is applied in order to fusion the sensor data. The filter means weights the input signal from the sensors depending on distance in the Z-direction. By weighting the sensor data an optimal resolution is obtained, shown with the dotted line 200 in figure 3.

The distance for the above example may tor instance be calculated as:

$$Z = (A*ZSensor1 + B*ZSensor2 + C*ZSensor3)$$

where A, B and C will be weight functions of Z. A. B and C will be adjusted to reflect the quality of a signal (signal-to-noise ratio) for a given distance. The values for the parameters A, B and C may be obtained from a model or a look up table, which may be stored in the memory means 140. There will be a separate and specific look up table for each sensor.

The filter, i.e. the parameters A, B and C may also be dependable on and adaptive to changes in the surrounding environment, such as ambient light, humidity etc, in order to be able to compensate for such changes. Also such adaption to the surrounding environment may be stored in a look up table for each sensor.

It should be understood that even if the above example equation only shows the value in the Z-direction, the above principle may be extended to three dimensions since the sensors spatial sensitivity may be different. One example of this is electric field detection, which has a spherical detection range, compared to for example optical triangulation, which has a more conical detection range.

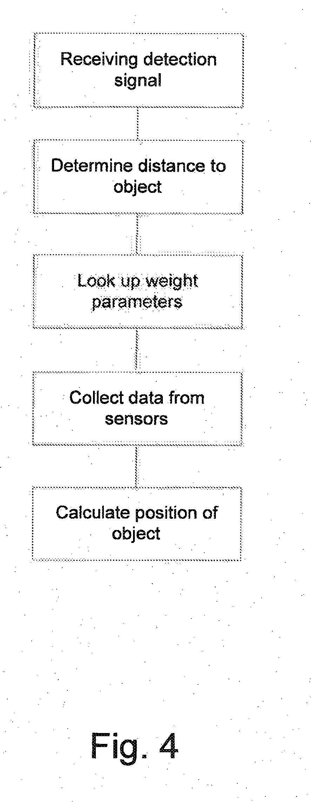

In order to fully understand the present invention a method for three-dimensional sensing of an object above the display of the mobile communication device will now be described in conjunction with figure 4.

The method starts first when the mobile communication device has been set in a three-dimensional detection mode. In the detecting mode, the three sensors 18-22 will be in an active mode and ready to detect an object or gesture. Thus, in a first step the mobile communication device is waiting for an object or gesture to be detected. When at least one of the sensors receives a detection signal indicating that an object is present above the display 12, the different sensors will start to collect data about the object. The collected data is used to determine the distance to the object, in this example the distance in the z-direction. If the distance for example is 30 mm, this value will be used to determine which weight each sensor will have in sensing the object. At this distance the first capacitive sensor 18 will have a high signal quality, the electric field sensor 20 have an acceptable signal quality and the optical sensor 22 have a very poor signal quality. Thus, in a next step the distance data is used to look up the weight parameters A, B and C associated with each sensor for this given distance. The parameters are used in the above described equation for the Z-direction.

$$Z = (A*ZSensor1 + B*ZSensor2 + C*ZSensor3).$$

In this case the parameter may be A=0.8, B=0.2 and C=0 to reflect the distance to the object of 30 mm. Thus, since sensor A, the first capacitive sensor 18, has the highest signal quality and thereby the smallest error range it will be given the most weight (80%) of the fusioned sensor data. Sensor B, the electric field sensor 20, which has an acceptable signal quality will be given a substantially smaller weight (20%) and the optical sensor 22 will in this case be given no weight, since its has a very poor signal quality. The sum of the different senor weights will always be 1, i.e. 100%.

It should be noted that above example shows the distance in the z-direction, but as is realized the same principle may be used for the X- and Y- direction, according to the following equations:

$$X = (A_1*XSensor1 + B_1*XSensor2 + C_1*XSensor3)$$

and

$$Y = (A_2*YSensor1 + B_2*YSensor2 + C_2*YSensor3),$$

where $A_n$, $B_n$ and $C_n$ will be weight functions of X and Y, respectively. As is realized by a person skilled in the art the three above equations may also be merged to one equation. Thus, the important thing is not how one goes about to fusion the data from different sensors, but instead that the data from the sensors are fusioned in order to optimize the spatial resolution.

After the parameters $A_n$, $B_n$ and $C_n$ have been acquired from the look up table the position of the detected object is calculated. Thus, the fusion of data will create an optimized resolution as shown with the dotted line in figure 3. After the fusion of data a signal containing information about the location of the object in the X-, Y-, Z-direction is sent to the processing logic. The information about the object may be used by the mobile communication device for gesture control of the display or gaming or other activities. In a preferred embodiment of the present invention the sensors may also collect information about the ambient environment such as light conditions in order to further optimize the spatial resolution.

It should be understood that the foregoing has described principles, preferred embodiments and modes of operation of the present invention. However, the invention should not be limited to particular embodiment discussed above, which should be regarded as illustrative rather then restrictive. Thus, as mentioned above the general inventive concept of the present invention is to fusion data from different sensors in order to optimize the spatial resolution of the tree-dimensional sensing. Thus, the present invention is best defined by the following claims.

**EP 2 630 559 B1**

**Claims**

1. A mobile communication device with three-dimensional sensing of objects in a spatial volume above a display (12) of the mobile communication device (2), comprising input means (100) having at least two sensors (18, 20, 22) configured for collecting data about objects in said spatial volume and a processing logic (130) for processing spatial object data, said mobile communication device is configured to execute the following steps when it is in a detection mode,
receiving a detection signal from at least one of the sensors (18, 20, 22) indicating that an object is present above the display (12),
determining the distance to the detected object,
looking up weight parameters ($A_n$; $B_n$; $C_n$) associated with each sensor (18, 20, 22), said weight parameters ($A_n$; $B_n$; $C_n$) being dependable on the determined distance,
collecting data about the detected object from each sensor (18, 20, 22), and
calculating the position of the detected object by using the collected data together with the looked up weight parameters ($A_n$; $B_n$; $C_n$),
**characterized in that**
the at least two sensors (18, 20, 22) have different spatial resolution that changes with distance, and
the mobile communication device is configured to look up the weight parameters ($A_n$; $B_n$; $C_n$) in a look up table.

2. The mobile communication device according to claim 1, wherein said weight parameters ($A_n$; $B_n$; $C_n$) further are dependable on the ambient light conditions.

3. The mobile communication device according to claim 1 or 2, wherein said weight parameters ($A_n$; $B_n$; $C_n$) further are dependable on the surrounding humidity.

4. The mobile communication device according to any of the previous claims, wherein the input means (100) comprises at least a capacitive sensor (18) and an electric field sensor (20).

5. The mobile communication device according to claim 4, wherein the input means (100) further comprises an optical sensor (22).

6. Mobile device according to any of the preceding claims, wherein the display (12) is a force sensitive display and configured to act as one of the at least two sensors.

7. Method for three-dimensional sensing of objects in a spatial volume above a display (12) of a mobile communication device (2), comprising input means (100) having at least two sensors (18, 20, 22) configured for collecting data about objects in said spatial volume and a processing logic (130) for processing spatial object data, said method, executed by the mobile communication device (2), is comprising the following steps,
receiving a detection signal from at least one of the sensors (18, 20, 22) indicating that an object is present above the display (12),
determining the distance to the detected object,
looking up weight parameters ($A_n$; $B_n$; $C_n$) associated with each sensor (18, 20, 22), said weight parameters ($A_n$; $B_n$; $C_n$) being dependable on the determined distance,
collecting data about the detected object from each sensor (18, 20, 22),
calculating the position of the detected object by using the collected data together with the looked up weight parameters ($A_n$; $B_n$; $C_n$),
**characterized in that**
the at least two sensors (18, 20, 22) have different spatial resolution that changes with distance, and
the weight parameters ($A_n$; $B_n$; $C_n$) are looked up in a look up table.

8. The method according to claim 7, wherein said weight parameters ($A_n$; $B_n$; $C_n$) further are dependable on the ambient light conditions.

9. The method according to claim 7 or 8, wherein said weight parameters ($A_n$; $B_n$; $C_n$) further are dependable on the surrounding humidity.

10. The method according to any of claims 7 to 9, wherein the data is collected from at least a capacitive sensor (18) and an electric field sensor (20).

**11.** The method according to claim 10, wherein the data further is collected from an optical sensor (22).

**12.** Method according to any of claims 7 to 11, wherein the data is collected from a force sensitive display (12) configured to act as one of the at least two sensors.


**Patentansprüche**

**1.** Mobile Kommunikationsvorrichtung mit einer dreidimensionalen Erfassung von Objekten in einem räumlichen Volumen über einer Anzeige (12) der mobilen Kommunikationsvorrichtung (2), umfassend ein Eingabemittel (100) mit mindestens zwei Sensoren (18, 20, 22), welche zum Sammeln von Daten über Objekte in dem räumlichen Volumen ausgestaltet sind, und eine Verarbeitungslogik (130) zum Verarbeiten räumlicher Objektdaten, wobei die mobile Kommunikationsvorrichtung ausgestaltet ist, die folgenden Schritte auszuführen, wenn sie in einer Erfassungsbetriebsart ist,

Empfangen eines Erfassungssignals von mindestens einem der Sensoren (18, 20, 22), welches anzeigt, dass ein Objekt über der Anzeige (12) vorhanden ist,

Bestimmen des Abstandes zu dem erfassten Objekt,

Nachschlagen von Gewichtsparametern ($A_n$; $B_n$; $C_n$), welche jedem Sensor (18, 20, 22) zugeordnet sind, wobei die Gewichtsparameter ($A_n$; $B_n$; $C_n$) von der bestimmten Entfernung abhängig sind,

Sammeln von Daten über das erfasste Objekt von jedem Sensor (18, 20, 22), und

Berechnen der Position des erfassten Objekts durch Verwenden der gesammelten Daten zusammen mit den nachgeschlagenen Gewichtsparametern ($A_n$; $B_n$; $C_n$),

**dadurch gekennzeichnet, dass**

die mindestens zwei Sensoren (18, 20, 22) eine unterschiedliche räumliche Auflösung aufweisen, welche sich mit der Entfernung ändert, und

die mobile Kommunikationsvorrichtung ausgestaltet ist, die Gewichtsparameter ($A_n$; $B_n$; $C_n$) in einer Nachschlagetabelle nachzuschlagen.

**2.** Mobile Kommunikationsvorrichtung nach Anspruch 1, wobei die Gewichtsparameter ($A_n$; $B_n$; $C_n$) ferner von den Umgebungslichtbedingungen abhängig sind.

**3.** Mobile Kommunikationsvorrichtung nach Anspruch 1 oder 2, wobei die Gewichtsparameter ($A_n$; $B_n$; $C_n$) ferner von der Umgebungsfeuchtigkeit abhängig sind.

**4.** Mobile Kommunikationsvorrichtung nach einem der vorhergehenden Ansprüche, wobei das Eingabemittel (100) mindestens einen kapazitiven Sensor (18) und einen elektrischen Feldsensor (20) umfasst.

**5.** Mobile Kommunikationsvorrichtung nach Anspruch 4, wobei das Eingabemittel (100) ferner einen optischen Sensor (22) umfasst.

**6.** Mobile Vorrichtung nach einem der vorhergehenden Ansprüche, wobei die Anzeige (12) eine druckempfindliche Anzeige ist und ausgestaltet ist, als einer der mindestens zwei Sensoren zu wirken.

**7.** Verfahren für ein dreidimensionales Erfassen von Objekten in einem räumlichen Volumen über einer Anzeige (12) einer mobilen Kommunikationsvorrichtung (2), welche ein Eingabemittel (100) mit mindestens zwei Sensoren (18, 20, 22), welche zum Sammeln von Daten über Objekte in dem räumlichen Volumen ausgestaltet sind, und eine Verarbeitungslogik (130) zum Verarbeiten räumlicher Objektdaten umfasst, wobei das Verfahren, welches von der mobilen Kommunikationsvorrichtung (2) ausgeführt wird, die folgenden Schritte umfasst,

Empfangen eines Erfassungssignals von mindestens einem der Sensoren (18, 20, 22), welches anzeigt, dass ein Objekt über der Anzeige (12) vorhanden ist,

Bestimmen der Entfernung zu dem erfassten Objekt,

Nachschlagen von Gewichtsparametern ($A_n$; $B_n$; $C_n$), welche jedem Sensor (18, 20, 22) zugeordnet sind, wobei die Gewichtsparameter ($A_n$; $B_n$; $C_n$) von der bestimmten Entfernung abhängig sind,

Sammeln von Daten über das erfasste Objekt von jedem Sensor (18, 20, 22),

Berechnen der Position des erfassten Objekts durch Verwenden der gesammelten Daten zusammen mit den nachgeschlagenen Gewichtsparametern ($A_n$; $B_n$; $C_n$),

**dadurch gekennzeichnet, dass**

die mindestens zwei Sensoren (18, 20, 22) eine unterschiedliche räumliche Auflösung aufweisen, welche sich mit der Entfernung ändert, und
die Gewichtsparameter ($A_n$; $B_n$; $C_n$) in einer Nachschlagetabelle nachgeschlagen werden.

**8.** Verfahren nach Anspruch 7, wobei die Gewichtsparameter ($A_n$; $B_n$; $C_n$) ferner von den Umgebungslichtbedingungen abhängig sind.

**9.** Verfahren nach Anspruch 7 oder 8, wobei die Gewichtsparameter ($A_n$; $B_n$; $C_n$) ferner von der Umgebungsfeuchtigkeit abhängig sind.

**10.** Verfahren nach einem der Ansprüche 7-9, wobei die Daten von zumindest einem kapazitiven Sensor (18) und einem elektrischen Feldsensor (20) gesammelt werden.

**11.** Verfahren nach Anspruch 10, wobei die Daten ferner von einem optischen Sensor (22) gesammelt werden.

**12.** Verfahren nach einem der Ansprüche 7-11, wobei die Daten von einer druckempfindlichen Anzeige (12) gesammelt werden, welche ausgestaltet ist, als einer der mindestens zwei Sensoren zu wirken.


**Revendications**

**1.** Dispositif de communication mobile avec détection tridimensionnelle d'objets se situant dans un volume spatial au-dessus d'un écran d'affichage (12) du dispositif de communication mobile (2), comprenant un moyen d'entrée (100) comportant au moins deux capteurs (18, 20, 22) configurés pour recueillir des données sur les objets situés dans ledit volume spatial et une logique de traitement (130) destinée à traiter des données spatiales d'objets, ledit dispositif de communication mobile étant configuré pour, lorsqu'il est dans un mode de détection, exécuter les étapes consistant à :

recevoir, d' au moins un des capteurs (18, 20, 22), un signal de détection indiquant qu'un objet est présent au-dessus de l'écran d'affichage (12) ;
déterminer la distance de l'objet détecté ;
rechercher des paramètres de pondération ($A_n$ ; $B_n$ ; $C_n$) associés à chacun des capteurs (18, 20, 22), lesdits paramètres de pondération ($A_n$ ; $B_n$ ; $C_n$) pouvant dépendre de la distance déterminée ;
recueillir des données sur l'objet détecté auprès de chacun des capteurs (18, 20, 22) ; et
calculer la position de l'objet détecté en utilisant les données recueillies avec les paramètres de pondération ($A_n$ ; $B_n$ ; $C_n$) recherchés ;
**caractérisé en ce que** :

lesdits au moins deux capteurs (18, 20, 22) ont une résolution spatiale différente, qui varie avec la distance ; et
le dispositif de communication mobile est configuré pour rechercher les paramètres de pondération ($A_n$ ; $B_n$ ; $C_n$) dans une table de consultation.

**2.** Dispositif de communication mobile selon la revendication 1, dans lequel lesdits paramètres de pondération ($A_n$ ; $B_n$ ; $C_n$) peuvent en outre dépendre des conditions lumineuses ambiantes.

**3.** Dispositif de communication mobile selon la revendication 1 ou 2, dans lequel lesdits paramètres de pondération ($A_n$ ; $B_n$ ; $C_n$) peuvent en outre dépendre de l'humidité ambiante.

**4.** Dispositif de communication mobile selon l'une quelconque des revendications précédentes, dans lequel le moyen d'entrée (100) comprend au moins un capteur capacitif (18) et un capteur de champ électrique (20).

**5.** Dispositif de communication mobile selon la revendication 4, dans lequel le moyen d'entrée (100) comprend en outre un capteur optique (22).

**6.** Dispositif de communication mobile selon l'une quelconque des revendications précédentes, dans lequel l'écran d'affichage (12) est un écran d'affichage sensible à la force et est configuré pour jouer le rôle de l'un desdits au moins deux capteurs.

**7.** Procédé de détection tridimensionnelle d'objets se situant dans un volume spatial au-dessus d'un écran d'affichage (12) d'un dispositif de communication mobile (2), comprenant un moyen d'entrée (100) comportant au moins deux capteurs (18, 20, 22) configurés pour recueillir des données sur les objets situés dans ledit volume spatial et une logique de traitement (130) destinée à traiter des données spatiales d'objets, ledit procédé, exécuté par le dispositif de communication mobile (2), comprenant les étapes consistant à :

recevoir, d' au moins un des capteurs (18, 20, 22), un signal de détection indiquant qu'un objet est présent au-dessus de l'écran d'affichage (12) ;
déterminer la distance de l'objet détecté ;
rechercher des paramètres de pondération ($A_n$ ; $B_n$ ; $C_n$) associés à chacun des capteurs (18, 20, 22), lesdits paramètres de pondération ($A_n$ ; $B_n$ ; $C_n$) pouvant dépendre de la distance déterminée ;
recueillir des données sur l'objet détecté auprès de chacun des capteurs (18, 20, 22) ; et
calculer la position de l'objet détecté en utilisant les données recueillies avec les paramètres de pondération ($A_n$ ; $B_n$ ; $C_n$) recherchés ;
**caractérisé en ce que** :

lesdits au moins deux capteurs (18, 20, 22) ont une résolution spatiale différente, qui varie avec la distance ; et
les paramètres de pondération ($A_n$ ; $B_n$ ; $C_n$) sont recherchés dans une table de consultation.

**8.** Procédé selon la revendication 7, dans lequel lesdits paramètres de pondération ($A_n$ ; $B_n$ ; $C_n$) peuvent en outre dépendre des conditions lumineuses ambiantes.

**9.** Procédé selon la revendication 7 ou 8, dans lequel lesdits paramètres de pondération ($A_n$ ; $B_n$ ; $C_n$) peuvent en outre dépendre de l'humidité ambiante.

**10.** Procédé selon l'une quelconque des revendications 7 à 9, dans lequel les données sont recueillies auprès d'un capteur capacitif (18) et d'un capteur de champ électrique (20).

**11.** Procédé selon la revendication 10, dans lequel les données sont en outre recueillies auprès d'un capteur optique (22).

**12.** Procédé selon l'une quelconque des revendications 7 à 11, dans lequel les données sont recueillies auprès d'un écran d'affichage sensible à la force qui est configuré pour jouer le rôle de l'un desdits au moins deux capteurs.

Fig. 1

Fig. 2

Fig. 3

Receiving detection
signal

Determine distance to
object

Look up weight
parameters

Collect data from
sensors

Calculate position of
object

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070222766 A1
- US 20060170658 A1